(19) Europäisches Patentamt
European Patent Office
Office européen des brevets

(11) **EP 2 123 600 A1**

(12) **EUROPEAN PATENT APPLICATION**
published in accordance with Art. 153(4) EPC

(43) Date of publication:
**25.11.2009 Bulletin 2009/48**

(51) Int Cl.:
**C01B 25/10** [(2006.01)]   **B01D 53/14** [(2006.01)]
**B01D 53/68** [(2006.01)]   **B01D 53/77** [(2006.01)]
**C01B 25/455** [(2006.01)]

(21) Application number: **08704434.3**

(22) Date of filing: **05.02.2008**

(86) International application number:
**PCT/JP2008/051807**

(87) International publication number:
**WO 2008/096724 (14.08.2008 Gazette 2008/33)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **08.02.2007 JP 2007029406**

(71) Applicant: **Stella Chemifa Corporation
Osaka-shi
Osaka 541-0047 (JP)**

(72) Inventors:
• **WAKI, Masahide
Izumiotsu-shi
Osaka 595-0075 (JP)**

• **MIYAMOTO, Kazuhiro
Izumiotsu-shi
Osaka 595-0075 (JP)**
• **AOKI, Kenji
Izumiotsu-shi
Osaka 595-0075 (JP)**

(74) Representative: **Meissner, Bolte & Partner
Anwaltssozietät GbR
Postfach 86 06 24
81633 München (DE)**

(54) **PROCESSES FOR PRODUCING PHOSPHORUS PENTAFLUORIDE AND HEXAFLUOROPHOSPHATE**

(57)    A process for phosphorus pentafluoride production by which high-purity phosphorus pentafluoride can be produced by a simple and economical procedure without the need of a large-scale purification apparatus or high-pressure apparatus and without generating a large amount of a by-product gas requiring a special discharge-gas treatment. The process for phosphorus pentafluoride production is **characterized by** introducing hydrogen fluoride and a hexafluorophosphate ($MPF_6$) into a vessel and reacting them according to the reaction shown by the scheme (1) to yield phosphorus pentafluoride. $MPF_6$ + $uHF \rightarrow PF_5$ + MF r(HF) (Scheme 1) In the scheme, M is at least any one of Li, Na, K, Rb, Cs, $NH_4$, and Ag; $0 \leq r \leq u$; and the HF is used in an amount not smaller than the stoichiometric amount.

Fig.1

EP 2 123 600 A1

**Description**

TECHNICAL FIELD

The present invention relates to a method of manufacturing phosphorous pentafluoride and a hexafluorophosphate. More particularly, the present invention relates to a method of manufacturing a hexafluorophosphate that is useful as an electrolyte for a battery, a catalyst for an organic synthesis reaction, and the like, and a method of manufacturing phosphorous pentafluoride that is used as a starting raw material in manufacturing a hexafluorophosphate.

BACKGROUND ART

Phosphorous pentafluoride ($PF_5$) is a substance that is gaseous at room temperature and is used as a fluorinating agent in various chemical reactions in the electronics industries, and it is especially a starting material of manufacturing a hexafluorophosphate $DPF_6$ (D = Li, Na, K, or the like) that is used in the electrolytic liquid of a battery. Among these, in the case of D = Li, lithium hexafluorophosphate is an important substance as the electrolyte of a lithium battery. Lithium hexafluorophosphate has extremely high safety, has excellent physical properties, is considered to be an indispensable substance particularly in a lithium secondary battery, and is greatly expected for the utilization in a hybrid car in the future.
Further, in the case of D = Ag, it being paid attention to as a counter ion that generates an acid that is necessary for an initiation and growth reaction in photo polymerization. Furthermore, in the case of D = $NH_4$, it is useful as a raw material that is used in the manufacture of an intermediate of medicine.
This lithium hexafluorophosphate is conventionally manufactured by dissolving lithium chloride into hydrogen fluoride and adding phosphorous pentachloride into the solution (Non-Patent Document 1: [Fluorine Chemistry Vol. 1 (1950)]. Further, it is also manufactured by a reaction of lithium fluoride and phosphorous pentafluoride (for example, Patent Documents 1 and 2).
As such, phosphorous pentafluoride is a very important compound in order to manufacture a high purity hexafluorophosphate ($DPF_6$: D is a metal) such as lithium hexafluorophosphate or potassium hexafluorophosphate or a hexafluorophosphoric acid compound such as triethylmethylammonium hexafluorophosphate or tetraethylammonium hexafluorophosphate. However, when manufacturing such a substance using $PF_5$, there is a common problem that the manufacturing cost becomes high because high purity $PF_5$ is extremely expensive.
Methods of manufacturing $PF_5$ are described in various documents, and especially the following documents can be mentioned.
The thermal decomposition described in Patent Document 3 (thermal decomposition of $LiPF_6$) follows the following chemical reaction Formula a. However, in the case of $LiPF_6$, the decomposition slightly occurs around 120 °C and $LiPF_6$ decomposes completely around 200 °C to 250 °C to give a LiF powder remained. Furthermore, in other cases, it is difficult to decompose $LiPF_6$ if the decomposition is not carried out a very high temperature such as about 250 °C in the case of $NH_4PF_6$, about 400 °C in the case of $NaPF_6$, and 600 °C to 700 °C in the case of $KPF_6$ and $CsPF_6$, and it is hard to say that such decomposition is industrially suitable in the aspect of facilities.
$$DPF_6 \rightarrow DF\ (s) + PF_5\ (gas) \qquad (Formula\ a).$$

The reactions described in Non-Patent Document 2 (fluorination of phosphorous using $ClF_3$ in a liquid HF medium), Patent Document 4, and Non-Patent Document 5 (fluorination of phosphorous using a fluorine gas) have a problem that it is very difficult to control the reactions because the reaction speeds are high and the reactions proceed explosively. Furthermore, because an expensive fluorine-based gas is used, as a matter of course, phosphorous pentafluoride that is obtained is also expensive.
The reaction yield in Patent Document 5 (a reaction of fluorspar and phosphoric acid in the presende of sulfuric trioxide) reaches only 12 %.
In the reaction of Patent Document 6 (fluorination of phosphoryl trifluoride ($POF_3$) using hydrogen fluoride in the existence of sulfuric trioxide), the yield is low, sulfuric acid is produced, and corrosiveness is extremely high in the presence of HF.
Furthermore, in the reaction of Patent Document 7 (by heating of calcium fluoride ($CaF_2$), phosphoric acid or monofluoro-phosphoric acid, and sulfur trioxide), $HPF_6 \cdot 2H_2O$ and $CaSO_4$ are produced in addition to $PF_5$, and a problem of separation and disposal of a large amount of calcium sulfate are problems that have to be coped with in this method.
Similarly to Patent Document 6, in the reaction of Patent Document 8 (a method of reacting hexafluorophosphoric acid ($HPF_6$) with a sulfur-based acid under high pressure), sulfuric acid is produced, corrosiveness is extremely high in the presence of HF, and water in the system and fluorosulfuric acid ($HSO_3F$) react with $PF_5$ even when oleum is used, and the produced $PF_5$ is decomposed into $POF_3$.

In the halogen exchange method and the chlorofluorination method of Non-Patent Document 3 (fluorination of phosphorous pentachloride ($PCl_5$) using arsenic trifluoride), Patent Document 9 (chlorination of phosphorous trifluoride), and Patent Document 10 (chlorination and fluorination of phosphorous trichloride), a large scale apparatus is necessary to separate hybrid halides ($PClF_4$ and $PCl_2F_3$) and HCl especially from phosphorous pentafluoride that is the desired final product.

In addition, in the reaction of Patent Document 11 (fluorination of phosphorous pentachloride ($PCl_5$) using calcium fluoride), the reaction has to be performed at a very high temperature of 250 °C to 300 °C, and consequently there is a problem that a reaction with members of the furnace proceeds, and any of these reactions are industrially unsuitable.

Furthermore, in the methods described in Patent Document 12 (fluorination of phosphorous pentachloride ($PCl_5$) using liquid phase and/or gas phase HF), Patent Document 13 (a method of manufacturing a high purity hexafluorophosphoric acid compound), and Patent Document 14 (a method of manufacturing a hexafluorophosphate by reacting phosphorous pentachloride and a hydrogen fluoride gas at a temperature of 60 °C to 165 °C and introducing the obtained phosphorous pentafluoride into an anhydrous hydrofluoric acid solution of an alkaline metal fluoride), handling of phosphorous pentachloride is difficult because it is a solid having high moisture absorption characteristics, and especially the workability is poor when the raw materials are placed into the manufacturing facilities, and there is a problem that it is difficult to attempt mechanization. Further, because phosphorous pentachloride easily reacts with moisture in the atmosphere, a toxic hydrogen chloride gas is often generated during the work to deteriorate the work environment.

Further, moisture that is contained in phosphorous pentachloride is mixed into the reaction system, the moisture that is mixed reacts with a part of the produced phosphorous pentafluoride, and phosphorous oxyfluoride such as $POF_3$ or $PO_2F$ is produced as a by-product. As a result, a hexafluorophosphate (for example, in the case of lithium) becomes an oxyfluorophosphoric acid compound such as $LiPOF_4$ or $LiPO_2F_2$, contaminates the product, and deteriorates the productivity of $LiPF_6$ in the end. Further, in the case of using this oxyfluorophosphoric acid compound as the electrolyte of a lithium battery, a problem occurs such that the characteristics of the battery are deteriorated.

In order to alleviate this problem, some methods have been proposed. For example, there is a method of reacting phosphorous pentachloride and anhydrous hydrogen fluoride, separating phosphorous oxyfluoride by cooling a mixed gas of the produced phosphorus pentafluoride and hydrogen chloride to a temperature that is the boiling point of phosphorous oxyfluoride or lower and the boiling point of phosphorous pentafluoride or higher, for example -40 °C to -84 °C, and then reacting the mixed gas with lithium fluoride that is dissolved into anhydrous hydrogen fluoride (Patent Document 15 (a method of manufacturing lithium hexafluorophosphate)).

However, in this method, since a small amount of phosphorus oxyfluoride is separated from the mixed gas of large excess hydrogen chloride and phosphorus pentafluoride, this separation operation is extremely difficult, and phosphorus oxyfluoride cannot be separated completely. Further, because the boiling point and the coagulating point of phosphorus oxyfluoride, for example, $POF_3$ are close to each other, there is a worry that the collection apparatus may occlude and this method cannot be said to be a method that is to be industrially sufficiently accepted.

Further, not only in this method, in the case of using a chloride (for example, phosphorous trichloride or phosphorus pentachloride) as a phosphorous raw material, hydrogen chloride is mixed into the produced phosphorus pentafluoride. Furthermore, because the boiling point of hydrochloric acid is -84.9 °C while the boiling point of phosphorus pentafluoride is -84.8 °C, it is impossible to separate hydrogen chloride from phosphorous pentafluoride by a simple method (Patent Document 16 (a method of manufacturing lithium hexafluorophosphate)).

On the other hand, disaggregation of $KPF_6$ is investigated in Non-Patent Document 4 [J. Inorg. Nucl. Chem., 1961, Vol. 20, pp. 147-154]. However, because the document is negative on generation of a $PF_6$ gas, conditions of the generation of the $PF_6$ gas and the like are not described at all.

Furthermore, when moisture is contained in the final product, in the case of M = Li, $LiPF_6$ is decomposed into LiF, HF, and $PF_5$ by the moisture. Because these substances are transferred in a gas state, an inner pressure is formed in the battery, and especially, HF not only reacts with an organic solvent, but also influences the corrosion of the case wrapping the battery. Therefore, it has a bad influence on the stability of the battery as a whole. From such reasons, $LiPF_6$ that is used as the electrolyte strictly limits the standards of purity, moisture, metal content, free hydrofluoric acid, and the like.

Naturally enough, the most economical method for obtaining phosphorous pentafluoride is a method utilizing the most inexpensive substance as the starting raw material. However, the method of manufacturing phosphorous pentafluoride is complicated as described above. Moreover, because there is a necessity to refine the produced phosphorous pentafluoride even when the manufacture is started from an inexpensive raw material, the manufacturing cost of phosphorous pentafluoride becomes high, which makes a hexafluorophosphate as the electrolyte expensive.

Therefore, in order to manufacture a high purity hexafluorophosphate ($DPF_6$: D is a metal element) or a high purity hexafluorophosphoric acid compound at a low price, the manufacturing cost of phosphorous pentafluoride is the most important. That is, it is necessary to suppress the bad influence due to mixing-in of moisture, and it is also necessary to adopt a method utilizing as a starting material in which an (anhydrous) oxide raw material such as phosphorous pentaoxide or a raw material of which a chloride or bromide raw material having high moisture absorption characteristics are not used, in the case of considering the work environment.

| | |
|---|---|
| Patent Document 1: | US-A-3 607 020 |
| Patent Document 2: | Japanese Patent Application Laid-Open JP-A-64-72901 |
| Patent Document 3: | Japanese Patent Application Laid-Open JP-A-2000-154 009 |
| Patent Document 4: | Japanese Patent Application Laid-Open JP-A-2001-122 605 |
| Patent Document 5: | French Patent No. 2,086,704 |
| Patent Document 6: | French Patent No. 2,082,502 |
| Patent Document 7: | US-A-3 634 034 |
| Patent Document 8: | Japanese Patent Application Laid-Open JP-A- 2005-507-849 |
| Patent Document 9: | US-A-3 584 999 |
| Patent Document 10: | Japanese Patent No. 3 494 343 |
| Patent Document 11: | German Patent No. 290,889 |
| Patent Document 12: | Japanese Patent Application Laid-Open JP-A-60-251 109 |
| Patent Document 13: | Japanese Patent Application Laid-Open JP-A-04-175 216 |
| Patent Document 14: | Japanese Patent Application Laid-Open JP-A-06-056 413 |
| Patent Document 15: | Japanese Patent Application Laid-Open JP-A-5-279 003 |
| Patent Document 16: | Japanese Patent Application Laid-Open JP-A-11-092 135 |
| Non-Patent Document 1: | Fluorine Chemistry Vol. 1 (1950) |
| Non-Patent Document 2: | "Fluorination of Phosphorous Using ClF3 in Liquid HF Medium": Clifford, Beachell, and Jack, Inorg. Nucl. Chem (1957), 5, 76-78 |
| Non-Patent Document 3: | "Fluorination of Phosphorous Pentachloride (PCl5) Using Arsenic Trifluoride": Ruff Die Chemie des Fluoros (1920), p. 239 |
| Non-Patent Document 4: | [J. Inorg. Nucl. Chem., 1961, Vol. 20, p. 147-154] |
| Non-Patent Document 5: | Gros, Hayman, and Stuart, Trans. Faraday Soc. (1966), 62 (10), 2716-18 |

BRIEF DESCRIPTION OF THE DRAWING

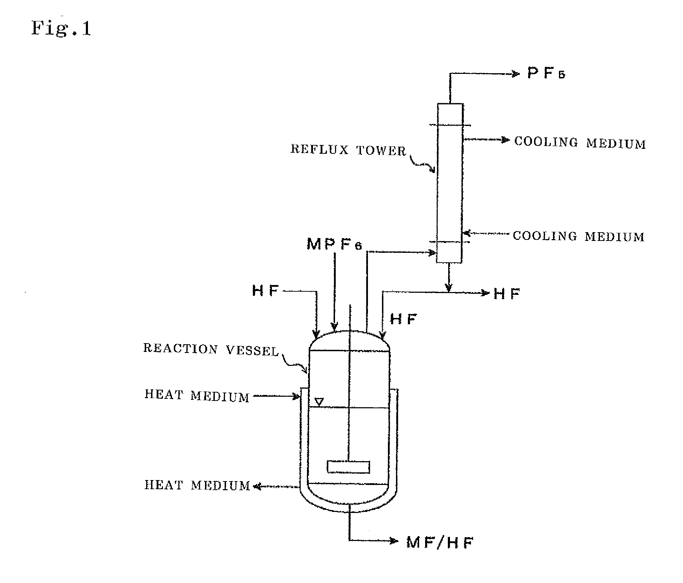

Fig. 1    is a schematic drawing of an apparatus used in the examples.

DISCLOSURE OF THE INVENTION

PROBLEMS TO BE SOLVED BY THE INVENTION

An object of the present invention is to provide a method of manufacturing phosphorus pentafluoride that can provide phosphorous pentafluoride having high purity by a simple and economical procedure without the need for a large-scale refining apparatus or a high pressure apparatus, and on top of that, that can manufacture phosphorous pentafluoride having high purity without generating a large amount of by-product gas that requires a special exhaust gas treatment in the case that phosphorus pentafluoride is generated.
Another object is to provide a method of manufacturing a hexafluorophosphate that can manufacture a hexafluorophosphate having high purity and low moisture content simply and at a low price.

MEANS FOR SOLVING THE PROBLEMS

In order to solve the above-described problems, the present inventors performed a devoted investigation, and as a result, found that a hexafluorophosphate having high purity and low moisture content is manufactured simply and at an inexpensive price by using phosphorous pentafluoride that is manufactured from a hexafluorophosphoric acid compound and hydrogen fluoride, and achieved the present invention.
The present invention provides a method of manufacturing phosphorous pentafluoride in which phosphorus pentafluoride is produced according to the reaction of Formula 1 by introducing hydrogen fluoride and a hexafluorophosphate (MPF$_6$) a container:

$$MPF_6 + u\,HF \rightarrow PF_5 + MF \cdot r\,(HF) \qquad (Formula\ 1),$$

wherein M is any one or more of Li, Na, K, Rb, Cs, $NH_4$, and Ag, $0 \leq r \leq u$, and
wherein HF is used in a stoichiometric amount or more.

Further, the present invention provides a method of manufacturing a hexafluorophosphate in which a hexafluorophosphate ($APF_6$) having high purity and low moisture concentration is produced according to the reaction of Formula 5 using a fluoride (AF) and phosphorous pentafluoride that is obtained by the method (according to any one of claims 1 to 7):

$$PF_5 + AF \rightarrow APF_6 \qquad (Formula\ 5),$$

wherein A is any one or more of Li, Na, K, Rb, Cs, $NH_4$, and Ag.

The method of manufacturing a hexafluorophosphate may be any of a method of reacting a gaseous phosphorous pentafluoride with a solid fluoride or an acidic fluoride, a method of reacting gaseous phosphorous pentafluoride with a fluoride that is dissolved into anhydrous hydrogen fluoride as a solvent or an acidic fluoride, and a method of reacting gaseous phosphorus pentafluoride with a fluoride or an acidic fluoride in an organic solvent.

EFFECT OF THE INVENTION

In the present invention, it is possible to generate phosphorous pentafluoride even at the outside of a high temperature region (less than 120 °C), and a hydrogen chloride gas, a hydrogen bromide gas, and the like are not generated because a chloride and a bromide are not used.

Furthermore, according to the present invention, because the operation is simple, a hexafluorophosphate $APF_6$ (A = Li, Na, K, Rb, or Cs) can be synthesized at a low price, and it can be used in the electrolyte of a battery whose further development for a hybrid car is expected in the future.

BEST MODE FOR CARRYING OUT THE INVENTION

The present invention provides a method of manufacturing $APF_6$ (A = any one or more of Li, Na, K, Rb, Cs, $NH_4$, and Ag) having high purity without using a phosphorous halide of chlorine, bromine, or the like other than fluorine and an (anhydrous) oxide raw material, by an industrially safe method, and at a relatively low temperature.

More specifically, the present invention provides a method of manufacturing phosphorous pentafluoride in which phosphorus pentafluoride is produced according to the reaction of the following chemical reaction Formula 1 by introducing a hexafluorophosphate ($MPF_6$) and hydrogen fluoride into a container and heating the inside of the reaction system to the boiling point of the reaction mixture or higher. However, M is any one or more of Li, Na, K, Rb, Cs, $NH_4$, and Ag, and it does not have to necessarily be a high purity product.

$$MPF_6 + u\,HF \rightarrow PF_5 + MF \cdot r\,(HF) \qquad (Formula\ 1)$$

$0 \leq r \leq u$, and in the formula, HF is used in the stoichiometric amount or more.

Furthermore, the present invention provides a method of manufacturing a hexafluorophosphate in which a hexafluorophosphate ($APF_6$) having high purity and low moisture concentration is produced according to the reaction of the following chemical reaction Formula 5 using phosphorous pentafluoride that is obtained by the above method and a fluoride (AF). However, A is any one or more of Li, Na, K, Rb, Cs, $NH_4$, and Ag.

$$PF_5 + AF \rightarrow APF_6 \qquad (Formula\ 5).$$

Furthermore, $MPF_6$ is synthesized by the reaction of the following chemical reaction Formula 2.

$$MF \cdot r\,(HF) + HF + H_xPO_yF_z \rightarrow MPF_6 + yH_2O \qquad (Formula\ 2).$$

However, $r \geq 0$, $0 \leq x \leq 3$, $1 \leq y \leq 4$, $0 \leq z \leq 6$, and among these preferably $0 \leq z \leq 5$ and especially preferably $0 \leq z \leq 3$, and in the formula, HF is used in the stoichiometric amount or more.

Further, $MPF_6$ is synthesized by the reaction of the following chemical reaction Formulae 3 and 4. Specifically, $MPF_6$ is synthesized by reacting an aqueous $H_xPO_yF_z$ solution and an aqueous hydrofluoric acid solution according to Formula 3, extracting a hexafluorophosphoric acid hydrate crystal ($HPF_6 \cdot qH_2O$) as a solid once, and then reacting the extracted $HPF_6 \cdot qH_2O$ and $MF \cdot r$ (HF) according to Formula 4.

$$H_xPO_yF_z + pHF \rightarrow HPF_6 \cdot qH_2O \qquad (\text{Formula 3})$$

(wherein $q \geq 1$)

$$HPF_6 \cdot qH_2O + MF \cdot r \text{ (HF)} \rightarrow MPF_6 + (r + 1) \text{ HF} + qH_2O \qquad (\text{Formula 4}).$$

Moreover, there is no problem when the ratio of added HF to $H_xPO_yF_z$ in the following chemical reaction Formulae 2 to 4 is 1 equivalent or more. However, in the case that the ratio of addition is small, the concentration of hydrofluoric acid after the reaction becomes low, and therefore the ratio of addition is preferably 1.5 equivalent or more. Furthermore, when the ratio of addition is increased, the concentration of hydrofluoric acid after the reaction can be increased.

However, because an increase in the ratio of addition is industrially uneconomical, the ratio of addition is preferably less than 10 equivalents. On the other hand, because the solubility of the produced $MPF_6$ decreases as the HF concentration increases, it is possible to increase the yield. However, because the amount of dissolved $MPF_6$ increases due to a large HF amount even if the solubility is low and the yield decreases, the ratio of addition is especially preferably 2 equivalents or more and 7.5 equivalents or less.

Further, $MF \cdot r$ (HF) that is produced by the chemical reaction Formula 1 is reused in the chemical reaction Formula 2 or 4.

In addition, M is any of Na, K, Rb, Cs, and $NH_4$, and A is Li. Furthermore, the P-containing gas that flows out during the $APF_6$ manufacture is recovered and reused by Formulas 2 to 4 using an absorption liquid containing at least one of water, hydrofluoric acid, and $MF \cdot r$ (HF) (M is any one or more of Li, Na, K, Rb, Cs, $NH_4$, and Ag).

More specifically, a $PF_5$ gas is generated according to the chemical reaction Formula 1 by introducing $MPF_6$ and HF into the reaction vessel and heating an $MPF_6$/HF liquid to 20 °C to lower than 120 °C. Furthermore, after that, by reacting a metal fluoride (AF) or an acidic metal fluoride (AF·r (HF)) and the $PF_5$ gas that is generated by the present invention according to the reaction of the chemical reaction Formula 5, a hexafluorophosphate ($APF_6$) having high purity and low moisture content (moisture concentration: 50 ppm by weight or less). However, M and A may be the same or may be different.

$MPF_6$ that is used in the reaction may be synthesized by a known method. Furthermore, $MPF_6$ having low purity (for example, having a large amount of metal impurities) may be used. Furthermore, $MPF_6$ may be a mother liquid containing $MPF_6$ that is produced in the synthesis process.

Here, M may be any of Li, Na, K, Rb, Cs, $NH_4$, and Ag. Among these, M is preferably an aqueous solution system and a compound with which the synthesis of a hexafluorophosphate having a moisture concentration 1000 ppm by weight or less is easy with the above-described chemical reaction Formula 2 or 4.

However, in the case of M = Li or Ag in the above-described chemical Formula 2 or 4, because the synthesis in an aqueous solution system is relatively difficult, at least one or more of $NaPF_6$, $KPF_6$, $RbPF_6$, $CsPF_6$, and $NH_4PF_6$ that can be easily synthesized in the above-described chemical Formula 2 or 4 is preferable. Furthermore, $KPF_6$ is especially preferable from the respect that the synthesis is easy also by a technique of synthesizing $KPF_6$ by the reaction of a potassium compound of phosphoric acid and hydrofluoric acid described in Japanese Patent Application Publication JP-A-5-072 324 in addition to the above-described chemical Formulae 2 to 4, in the respect that $KPF_6$ has low moisture absorption characteristics, and in the respect that the raw materials can be obtained easily at a low price.

However, in Japanese Patent Application Publication JP-A-5-072 324, potassium hexafluorophosphate is synthesized using 60 to 97 % by weight of hydrofluoric acid by reacting the acid with a potassium compound of phosphoric acid (potassium monophosphate or potassium polyphosphate) without using anhydrous hydrogen fluoride. However, it is described that in this method, although the reaction is not so intense as in the case of phosphorous pentaoxide, the temperature of the solution rapidly increases as the reaction proceeds when adding a potassium salt into hydrofluoric acid. Furthermore, it may be possible to synthesize rubidium hexafluorophosphate and cesium hexafluorophosphate by this method. However, in this case, the method of the present invention is preferable because rubidium monophosphate, cesium monophosphate, rubidium polyphosphate, and cesium polyphosphate cannot be obtained easily.

$LiPF_6$, $NaPF_6$, $KPF_6$, $RbPF_6$, $CsPF_6$, $NH_4PF_6$, and $AgPF_6$ that are synthesized in an aqueous solution by the methods in the above-described chemical reaction Formulae 2 to 4 contain a little moisture because they are synthesized in an aqueous solution system. Because the thermal decomposition temperature of $NaPF_6$, $KPF_6$, $RbPF_6$, $CsPF_6$, $NH_4PF_6$, and $AgPF_6$ is considerably high, it is possible to decrease the amount of moisture by drying at a temperature lower than 120 °C (moisture content of 1000 ppm by weight or less).

However, because partial thermal decomposition starts at 120 °C for $LiPF_6$, $LiPF_6$ inevitably contains about 1000 ppm by weight of moisture. However, because the content of moisture entering into the reaction system is extremely small (about 1000 ppm) compared to the method using moisture absorbable phosphorous pentachloride (the content of moisture entering into is 1 to 10 % by weight), it is difficult for the reaction of the following chemical reaction Formula 6 to occur, and it becomes possible to increase the yield.

$$MPF_6 + gHF + H_2O \rightarrow POF_3 + MF(HF)_n \quad 0 \leq n \leq g \qquad \text{(Formula 6)}.$$

On the other hand, A is contrary to the above, and may be any of Li, Na, K, Rb, Cs, $NH_4$, and Ag. However, Li, Na, $NH_4$, and Ag are preferable, and among these, Li and Ag whose synthesis in an aqueous solution system is relatively difficult are more preferable. Furthermore, Li that is a substance necessary in recent lithium secondary batteries is especially preferable.

There is no problem if the amount of hydrogen fluoride is 95 % by weight or more. However, because the generated $PF_5$ becomes $POF_3$ due to the moisture existing in the system as in the above-described chemical reaction Formula 5, the amount of hydrogen fluoride is preferably 97 % by weight or more and especially preferably 99 % by weight or more. Furthermore, the moisture in hydrogen fluoride may be removed by adding concentrated sulfuric acid into hydrogen fluoride. As such, even high purity hydrogen fluoride normally containing about 10 ppm of moisture may be used as it is. Furthermore, if necessary, the moisture can be further removed by performing rectification.

The feeding method of the raw materials is not especially limited, and hydrogen fluoride may be fed after putting a hexafluorophosphate ($MPF_6$) in the reaction vessel, or $MPF_6$ may be fed after feeding hydrogen fluoride into the reaction vessel in advance. The case of reacting phosphorous halide, for example phosphorous pentafluoride, and hydrogen fluoride is not preferable because the reaction heat is extremely larger than the amount of heat in dissolving, control of the reaction is difficult, the reaction liquid boils due to the reaction heat, and phosphorous pentafluoride, hydrogen fluoride, and a hydrogen chloride gas spout from the feeding port. This phenomenon is the same for the case of (anhydrous) phosphorous pentaoxide. However, because heat is hardly generated even when $MPF_6$ is dissolved into HF, the control of the reaction is easy and such a case is excellent for industrial purposes..

Hydrogen fluoride that is used in the generation of phosphorous pentafluoride is used in a liquid state in an amount such that the concentration of $MPF_6$ becomes 1 % by weight to 50 % by weight. $MPF_6$ does not have to necessarily be dissolved in hydrogen fluoride completely, and may be in a suspended state. However, because the reaction vessel needs to be large when $MPF_6$ is too dilute, the concentration of $MPF_6$ is preferably 2.5 % by weight to 40 % by weight.

Further, the solubility of $MPF_6$ is in inverse proportion to the cation size, and the solubility is the highest in the case of lithium which has the smallest cation size. Therefore, in order to increase the solubility, a liquid may be used in which at least one of M'F and M'F.r (HF) (however, M' is one type or more) having the smaller cation size than M is added and a salt exchange is performed. Further, the liquid after the salt exchange is performed may be used as it is. However, it is also possible to take out and use only the dissolved liquid. Furthermore, if necessary, the operation can be carried out in the presence of one or a plurality of catalysts.

In a reaction of generating phosphorous pentafluoride, hydrogen fluoride accompanies the generated phosphorous pentafluoride. However, there is no necessity to perform reflux by cooling and condensing hydrogen fluoride, and phosphorous pentafluoride and hydrogen fluoride may be used in the next reaction as they are. However, because it is difficult for the reaction to proceed when the amount of hydrogen fluoride in the reaction system is small, hydrogen fluoride is supplied into the reaction vessel on a timely basis in the case of not performing the reflux. In the case of performing the reflux, there is no problem if the temperature of the reflux tower is the boiling point of hydrogen fluoride (+19.5 °C in the case of 1 atmospheric pressure) or lower.

However, to trap more hydrogen fluoride, the temperature is +10 °C to -50 °C, preferably +5 °C to -25 °C, and more preferably 0 °C to -10 °C. Because the effect hardly changes even when operating the reflux tower at a temperature lower than -50 °C, there is no necessity to use a reflux apparatus at an extremely low temperature. Nevertheless, in the case of using phosphorous halide such as phosphorous pentachloride as a $PF_5$ raw material, because it is a solid having strong moisture absorption characteristics, a considerable amount of moisture is entered into the reaction system, and a $POF_3$ gas is generated from a decomposed part of the generated $PF_5$ gas.

Together, because hydrogen halide that is a by-product of the reaction is generated and the $POF_3$ gas and the hydrogen halide accompany a large amount of hydrogen fluoride as a carrier gas, a large amount of hydrogen fluoride is extracted from the reaction system. In order to trap and recover hydrogen fluoride from these accompanying gases, it is preferable to cool the gases to an extremely low temperature of -50 °C or less, and a significantly large cost is needed for an extremely low temperature generating apparatus or the like and its operation. Contrary to that, in the present invention, there is no necessity for an extremely low temperature of -50 °C or less when performing the reflux operation and the cost can be reduced.

Because MF·r (HF) increases as the reaction proceeds, the following chemical reaction Formula 7 occurs that is a reverse reaction of the above-described chemical reaction Formula 1. Because of this, it becomes difficult for the generation of the $PF_5$ gas to occur as the reaction proceeds. In order to suppress this, the MF·r (HF) may be extracted from the reaction system whenever necessary. In the case of extracting the MF·r (HF), the method may be any of a method of extracting the MF·r (HF) that is deposited as a solid, a method of extracting an HF solution in which the MF·r (HF) is dissolved whenever necessary, and the like.

Further, a small amount of $HPF_6$ is contained in the refluxed HF. This $HPF_6$ is unstable in anhydrous HF, and reacts again with MF(HF)r by returning to the reaction vessel to be stable $MPF_6$. Because of this, a $PF_5$ gas may be generated by putting the reflux liquid into a different reaction vessel without returning it directly to the reaction vessel.

$$PF_5 + MF \cdot r \, (HF) \to MPF_6 + rHF \qquad (\text{Formula 7}).$$

The pressure during the reaction in the chemical reaction Formula 1 is not especially limited. However, when the pressure is set to too high a pressure or too much a reduced pressure, because there is a large load in the aspect of facilities, the reaction is preferably performed at a normal pressure. However, in the case that it is desired, the reaction may be performed at an increased pressure or a reduced pressure.

Furthermore, reaction members and reflux tower members in the chemical reaction Formula 1 can be selected from members made of stainless steel or a stainless steel alloy, especially a chromium/nickel/iron/copper alloy such as trade names Inconel (registered trademark), Monel (registered trademark), and Hastelloy (registered trademark), members made of a fluorine resin (Polytetrafluoroethylene: "PTFE"), members made of a PFA resin (a tetrafluoroethylene perfluoroalkylvinylether copolymer), and apparatus members coated with these fluorine resins.

However, in the case of using phosphorous pentachloride or phosphorous trichloride and a halide of chlorine or the like as a raw material for the generation of phosphorous pentafluoride, because high-quality members have to be used that can deal with all of the moisture that is brought-in by the raw materials themselves, HCl that is produced as a by-product, and HF in the reaction system, the members that can be used are limited. Therefore, it leads to an increase in the facility cost.

However, by the method of the present invention, because the amount of the moisture that is brought-in is small (1000 ppm by weight or less) and hydrogen halide such as HCl is not produced as a by-product, it is possible to use any member as long as it is made of materials that are only durable to hydrogen fluoride.

Further, because a $PF_5$ gas is generated indirectly and sent to the reaction vessel of the chemical reaction Formula 5 in this method, metal impurities in the container in the chemical reaction Formula 1 do not mix into the $PF_5$ gas. That is, because there is no necessity to consider the problem of the metal impurities that has been a problem when using phosphorus pentachloride, the method leads to a cost reduction because even raw materials having a high metal impurity concentration can be used as long as the moisture content of $MPF_6$ that is used is 1000 ppm by weight or less. Therefore, the $PF_5$ gas generated by the method of the present invention can achieve a low price while having high purity.

Furthermore, the temperature of the reaction system of the chemical reaction Formula 1 is preferably the boiling point of the reaction system. That is, the produced phosphorus pentafluoride can be taken out from the reaction system with hydrogen fluoride being a carrier gas that is generated upon boiling by operating the reaction at the boiling point of the reaction system that is determined by the operating pressure, the concentration of $MPF_6$ in the reaction system, and the concentration of the produced MF·r (HF), and it is difficult for the reaction in the chemical reaction Formula 1 to proceed at the boiling point of the reaction system or lower, and it is difficult to generate phosphorous pentafluoride.

For example, in the case of 1 atmospheric pressure, the boiling point is determined in the range of 19.5 °C to less than 50 °C depending on the concentration of $MPF_6$ and the concentration of MF·r (HF) in the solution (the boiling point of hydrogen fluoride at 1 atmospheric pressure: +19.5 °C). Naturally enough, when the operating pressure is high, the boiling point is high, and when the operating pressure is reduced, the boiling point becomes low. When performing the operation at high temperature by increasing the pressure, the reaction speed becomes high. However, facilities that are durable to high pressure are required. When performing the operation at low temperature by decreasing the pressure, the reaction speed becomes low.

Then, when economics is evaluated by taking factors such as the temperature of the reaction system, the pressure-resistant strength of materials that constitutes the reactor, and the reaction speed, the operation is preferably performed at a temperature of the reaction system of 0 °C to 50 °C and a pressure in the absolute pressure being in the range of 0.5 atm to 10 atm, 15 °C to 35 °C, and above all, the operation is more preferably carried out in the range of 0.8 atm to 1.5 atm and at a reaction temperature in the reaction system of 20 °C to 30 °C.

A heat medium that is used to heat the reaction system is not especially limited as long as the boiling point thereof is the boiling point of the reaction system or higher, and steam or the like can be used. However, in the case of a temperature higher than 120 °C, troubles occur such that the incidental facilities and running costs become expensive, and therefore, it is preferable to add a heat source from outside so that the temperature becomes lower than 120 °C.

Furthermore, the reaction in the chemical reaction Formula 1 can be performed by either of a batch method and a continuous method. Furthermore, the reaction time is not especially limited. However, when considering the production efficiency, in the case of the batch method, it is preferable to generate the product within 24 hours.

Further, in order to promote the effect of extracting the generated phosphorous pentafluoride out of the reaction system, dry air or an inert gas such as $N_2$ or Ar that does not have an interaction with the reaction system can be used in an appropriate amount as a carrier gas. However, in this case, using a large amount of the inert gas is not preferable because of the economical problem, or because it increases the amount of accompanying hydrogen fluoride.

Because a $MPF_6$ raw material having a moisture content of 1000 ppm by weight or less is used in the $PF_5$ that is generated in the present invention, an oxy product such as $POF_3$ is not produced. Therefore, there is no necessity of refining. Further, because no halide raw material is used, there is no problem at all such that hydrogen halide is mixed in.

Furthermore, because MF·r (HF) that is produced by the chemical reaction Formula 1 can be circulated by reusing the MF·r (HF) in the chemical reaction Formula 2 or 4, the method of the present invention is excellent.

The method of manufacturing a hexafluorophosphate (especially preferably lithium hexafluorophosphate: $LiPF_6$) (the chemical reaction Formula 5) may be any of a method of reacting gaseous phosphorous pentafluoride that is obtained by the present invention with a solid fluoride: AF (especially preferably lithium fluoride: LiF), a method of reacting gaseous phosphorous pentafluoride that is obtained by the present invention with a fluoride: AF (especially preferably lithium fluoride: LiF) that is dissolved into anhydrous hydrogen fluoride as a solvent, and a method of reacting gaseous phosphorous pentafluoride that is obtained by the present invention with a fluoride: AF (especially preferably lithium fluoride: LiF) in an organic solvent. Moreover, in the case of using anhydrous hydrogen fluoride as a solvent, it is preferable to perform the reaction at the boiling point or lower (for example, 19.5 °C or lower) by performing a treatment such as cooling in order to suppress the reaction of the chemical reaction Formula 5.

Any material that is durable to anhydrous hydrofluoric acid (HF) can be used for the reaction vessel of the chemical reaction Formula 5. However, if there are problems during the step, that is, the cases of leakage or exposure to the air, there is a fear that the material reacts with concentrated hydrofluoric acid and is corroded. If the reactor is corroded, the product is inevitably contaminated with the corroded substances, and these contaminated substances act as a cause for increasing the content of the metal components in the product. From these points, the apparatus, piping and the like that are configured are preferably coated with a fluorine resin (for example, PTFE or PFA) for the management of the metal component.

Because a hexafluorophosphate ($DPF_6$: D is a metal element) that is in a salt state is more stable in anhydrous HF, it does not easily dissociate, and it is difficult to generate a $PF_6$ gas. On the other hand, hexafluorophosphoric acid ($HPF_6$) that is in an acid state cannot exist stably as $HPF_6$ in anhydrous HF, and easily dissociates and gasifies. This agrees with a known matter that $PF_5$ is hardly absorbed or is not absorbed at all into anhydrous HF and an $HPF_6$ complex is not formed in absence of water.

Furthermore, during the reaction in the Formula 5, an excess amount of $PF_5$ gas is reacted to a fluoride (AF) for the purposes of manufacturing a product having higher purity, of increasing the yield more, or the like. However, excess $PF_5$ flows out of the reaction system and invites a decrease in the yield of phosphorous.

In order to reduce this loss of the phosphorous source, a gas that is originated from the excess $PF_5$ that flows out of the reaction system is absorbed into 0 to 80 % by weight of water or an aqueous hydrofluoric acid solution, or into 0 to 80 % by weight of water or an aqueous hydrofluoric acid solution in which an M salt (the M salt is any one or more of carbonates, hydroxides, and halides of any one or more of Li, Na, K, Rb, Cs, $NH_4$, and Ag) is dissolved, and is recovered as $MPF_6$ or $H_xPO_yF_z$ ($0 \leq x \leq 3$, $1 \leq y \leq 4$, $0 \leq z \leq 6$).

Furthermore, among those, especially preferably, the gas that is originated from the excess $PF_5$ that flows out of the reaction system is absorbed into 0 to 80 % by weight of water or an aqueous hydrofluoric acid solution in which a fluoride of MF·r (HF) is dissolved, and is recovered as $MPF_6$ or $HPF_6$. Here, MF·r (HF) may be obtained by a reaction of hydrofluoric acid with the above-described M salt.

Here, this flowed-out gas may be absorbed into water or an aqueous hydrofluoric acid solution once and supplied to the reaction of Formula 2 or 3. However, it is preferable that the M salt (the M salt is any one or more of carbonates, hydroxides, and halides of any one or more of Li, Na, K, Rb, Cs, $NH_4$, and Ag) is added to the aqueous HF solution in advance because the phosphorus source can be absorbed efficiently. Furthermore, among these, MF·r (HF) (r ≥ 0) is especially preferable. Further, a fluoride salt of K, Rb, Cs, or $NH_4$ is preferable of which the solubility of MF·r (HF) that is added is high and the solubility of $MPF_6$ is low, and that is easily separated from the reaction system. Furthermore, among those, Na and K are the most preferable when considering that the raw materials can be obtained easily and considering problems such as draining. Moreover, the absorption method is not especially limited, and the absorption is performed by a known method using a packed tower, a multistage tower, a spray tower, or the like.

By performing the reaction in such a manner, a circulation type manufacture can be performed, and the loss of the raw materials becomes is extremely reduced. Furthermore, phosphorous pentafluoride and a hexafluorophosphate that is obtained by the present invention can be manufactured at a low price while having a moisture content of 50 ppm by weight or less and a free acid concentration of 50 ppm by weight or less.

EXAMPLES

In the following, preferred examples of the present invention are explained in detail for the purpose of exemplification. However, the materials, the compounding amounts, and the like that are described in these examples are not for the purpose of limiting the scope of the present invention as long as there is no particular limitative description, and they are just explanatory examples.

All of the examples and comparative examples were performed at atmospheric pressure.

Example 1

The following operations were performed using an apparatus shown in Fig. 1.

50 g of potassium hexafluorophosphate ($KPF_6$) and 2000 g of anhydrous hydrogen fluoride (HF) of commercial quality were placed in a 5 L reaction vessel made of a fluorine resin (PFA) together with a rotator, and the reaction vessel was connected to a reflux tower (20 mmφ x 2 m) made of SUS 316. The PFA reaction vessel was heated with a water bath so that the temperature outside the reaction vessel became 45 °C, and at the same time, the reflux tower was cooled with a brine of -50 °C. Furthermore, the reaction liquid was stirred with a magnetic stirrer. As the bath temperature increased, the reflux of HF started. The HF temperature inside at that time was 21 °C.

After 5 minutes, a gas started to generate from the reflux tower. The analysis of this gas was performed with FTIR. As a result, it was confirmed that the gas was $PF_5$ and a small amount of HF.

Example 2

330 g of lithium hexafluorophosphate ($LiPF_6$) and 2000 g of anhydrous HF were placed in a 5 L PFA reaction vessel together with a rotator, and the reaction vessel was connected to a reflux tower (20 mmφ x 2 m) made of SUS 316. The PFA reaction vessel was heated with a water bath to 80 °C, and at the same time, the reflux tower was cooled with a brine of 0 °C. Furthermore, the reaction liquid was stirred with a magnetic stirrer. As the bath temperature increased, the reflux of HF started. The HF temperature inside at that time was 30 °C.

The analysis of the gas that was generated from the reflux tower was performed with FTIR, and it was confirmed that it was $PF_5$ and a small amount of HF. At the same time, the generated gas was absorbed into pure water for 4 hours, and the P content of the absorption liquid was measured. As a result, the weight of the $PF_5$ gas that was generated was calculated to be 205 g, and it was possible to generate 75 % of the gas.

Example 3

90 g of ammonium hexafluorophosphate ($NH_4PF_6$) and 2000 g of anhydrous HF were placed in a 5 L PFA reaction vessel together with a rotator, and the reaction liquid was stirred with a magnetic stirrer. Example 3 was performed without setting up the reflux tower. The generated gas was analyzed with FTIR, and at the same time, it was absorbed into pure water. When the PFA reaction vessel was heated with a water bath to 65 °C, hydrogen fluoride evaporated and reacted vigorously with pure water as the absorption liquid. When the FTIR analysis was performed on the generated gas, it was confirmed that the gas was $PF_5$ and a large amount of HF. The gas was absorbed into pure water for 6 hours, and the P content of the absorption liquid was measured. As a result, the weight of the $PF_5$ gas that was generated was calculated to be 43 g, and it was possible to generate 62 % of the gas.

Example 4

1.5 kg of cesium hexafluorophosphate ($CsPF_6$), 140 g of lithium fluoride (LiF), and 18 kg of anhydrous hydrogen fluoride (HF) were placed in a 20 L PTFE reaction vessel together with a rotator, and the reaction vessel was connected to a reflux tower (20 mmφ x 2 m) made of SUS 316. Furthermore, separately, 210 g of silver fluoride (AgF) and 500 g of anhydrous HF were placed in a 3 L PFA reaction vessel together with a rotator and dissolved, and the outlet of the reflux tower was connected to the 3 L PFA reaction vessel so that the generated gas can be absorbed in the 3 L PFA reaction vessel.

The 20 L PFA reaction vessel was heated with a water bath to 70 °C, and the 3 L PFA reaction vessel was cooled with an ice bath. The reflux tower was cooled with a brine of 0 °C. Stirring was performed in each of the two reaction vessels.

The temperature of the 20 L PFA reaction vessel gradually increased, the internal temperature became 23 °C, and the reflux of HF started. At almost the same time as that, the temperature of the 3 L PFA reaction vessel increased from 0 °C to 5 °C. After the reaction was performed for 6 hours, the 3 L PFA reaction vessel was removed from the reflux tower, cooled to -40 °C, and crystallization was performed for 48 hours.

Next, the supernatant liquid in the 3 L PFA reaction vessel was slowly taken out, and solid-liquid separation was performed. After the separation, $N_2$ was introduced into a bottle at 3 L/min, and dried by air. Furthermore, after that, drying was performed in a dryer at 85 °C for 3 hours, and 395 g of a crystal was obtained.

The obtained crystal was analyzed with XRD, and it was found that the crystal belongs to silver hexafluoro-phosphate ($AgPF_6$). Further, the moisture content was 50 ppm by weight or less, and the concentration of free hydrofluoric acid was 50 ppm by weight or less. The moisture content was measured with a moisture meter, and the concentration of free hydrofluoric acid was obtained by titration with sodium hydroxide.

Example 5

Step I

1.2 kg of acidic potassium fluoride ($KHF_2$) was placed in a 10 L PTFE reaction vessel, and 5.25 kg of HF (semiconductor grade 75 %) was slowly added while being cooled with an ice bath. Furthermore, 1.3 kg of 85 % by weight phosphoric acid ($H_3PO_4$) was added over 30 minutes. Stirring was performed for 6 hours with a water bath of +20 °C, and the reaction and the crystallization were performed. Next, the obtained precipitate was filtered by suction filtration.

The recovered crystal was washed with water, and then, dried for 6 hours at 105 °C. The yielded amount of the obtained crystal was 1.35 kg (yield 65 %). Furthermore, XRD measurement was performed on the obtained crystal, and it was found that the crystal was $KPF_6$. Because the yielded amount of the obtained crystal was 1.35 kg, the yield was 65 %.

Step II

1.2 kg of $KPF_6$ that was obtained above and 6 kg of anhydrous hydrogen fluoride (HF) were placed in a 10 L PTFE reaction vessel together with a rotator, and the reaction vessel was connected to a reflux tower (20 mmφ x 2 m) made of SUS 316. Furthermore, separately, 95 g of LiF and 1200 g of anhydrous HF were placed in a 2 L PTFE reaction vessel together with a rotator and dissolved, and the outlet of the reflux tower was connected to the 2 L PTFE reaction vessel so that the generated gas can be absorbed in the 2 L PTFE reaction vessel. Furthermore, in order to absorb exhaust gas, a 3 L PTFE reaction vessel was connected to the latter stage of the 2 L PTFE reaction apparatus. In this 3 L PTFE reaction vessel, a liquid was used in which 50 g of KF·(HF) was dissolved into 2 kg of 50 % by weight HF.

The 10 L PTFE reaction vessel was heated with a water bath of 85 °C, and the 2 L PTFE reaction vessel and the 3 L PTFE reaction vessel were cooled with an ice bath. The reflux tower was cooled with a brine of 0 °C. Stirring was performed in each of the three reaction vessels.

The temperature of the 10 L PTFE reaction vessel gradually increased, the internal temperature became 25 °C, and the reflux of HF started. At almost the same time as that, the temperature of the 2 L PTFE reaction vessel increased from 0 °C to 8 °C, and the solution gradually became cloudy.

Step III

After the reaction was performed for 8 hours, the 2 L PTFE reaction vessel was removed from the reflux tower, and stirring was performed for 4 hours while being cooled to -40 °C. Solid-liquid separation was performed on the obtained crystal product by filtration and the resulting crystal was transferred to a 1 L PFA container, $N_2$ was introduced at a flow rate of 3 L/min at room temperature for 4 hours, and the crystal was dried by air. After that, drying was performed on the 1 L PFA container at 85 °C for 3 hours, and 480 g of a crystal was obtained.

Analysis of the obtained crystal was performed, and it was found that the crystal belongs to $LiPF_6$, the moisture content was 50 ppm by weight or less, and the concentration of free hydrofluoric acid was 50 ppm by weight or less.

Step IV

A liquid was taken out from the 3 L PTFE reaction vessel and ion chromatography analysis was performed on the liquid, and it was found that PF6- anions were detected. This shows that the exhaust gas can also be trapped and reused as a raw material.

Step V

Furthermore, the 10 L PTFE reaction vessel after the reaction was removed from the reflux tower, the solution was concentrated by a water bath of 35 °C, and the HF solution containing viscous $KPF_6/KF\cdot v(HF)$ ($v \geq 0$) was recovered. It was possible to reuse this solution in step I.

Comparative Example 1

200 g of $KPF_6$ and 2000 g of anhydrous HF were placed in a 5 L PFA reaction vessel together with a rotator, and the reaction vessel was connected to a reflux tower (20 mm$\phi$ x 2 m) made of SUS 316. Furthermore, the reflux tower was connected to an absorption vessel in which pure water was placed from the upper part of the reflux tower with a PFA pipe. The PFA reaction vessel was kept at 15 °C with an ice bath, and at the same time, the reflux tower was cooled with a brine of 0 °C. Furthermore, the reaction liquid was stirred with a magnetic stirrer. The internal temperature of the reaction vessel was 14.2 °C, boiling of the reaction liquid did not occur in this condition, and reflux was not observed.

After 4 hours, the analysis of P was performed on the absorption liquid of the absorption vessel with ICP-AES and the weight of the generated $PF_5$ gas was obtained. As a result, the weight was 0 g, and the $PF_5$ gas was not generated at all.

Conventional Example

The present example is an example showing a conventional example described in Patent Document 8. 790 g (9.4 mol) of polyphosphoric acid was put in a 5 L PFA reaction vessel, and 1235 g (61.7 mol) of anhydrous HF was added while stirring while keeping the temperature at 25 °C by cooling. Furthermore, 150 g of anhydrous HF was added and 25 % excess HF was obtained in the above-described solution. The reaction vessel was connected to a reflux tower (cooled to -50 °C), the temperature was kept at 32 °C, and 1781 g (14.5 mol) of fuming sulfuric acid (65 %$SO_3$) was added over 3 hours. The analysis was performed on the generated gas with FTIR. As a result, a very small amount of $PF_5$ was contained in $POF_3$.

From the above result, it is possible to produce phosphorous pentafluoride by reacting a hexafluorophosphate ($MPF_6$) and hydrogen fluoride in a hydrogen fluoride solvent and heating the product to the boiling point of the reaction system or higher, and phosphorous pentafluoride can be easily generated even without a high temperature of 120 °C or more. Furthermore, by reacting phosphorous pentafluoride that is obtained in the present invention and a fluoride (AF), a hexafluorophosphate ($APF_6$) having a low moisture content and high purity can be manufactured relatively easily and simply.

INDUSTRIAL APPLICABILITY

A hexafluorophosphate that is manufactured by the present invention is utilized as an electrolyte for a battery, a catalyst for an organic synthesis reaction, and the like.

Among these, especially, a hexafluorophosphate ($APF_6$) (A = Li, Na, K, or the like) is used as an electrolyte for a battery such as for products related to a personal computer, for a portable phone, and for a hybrid car. Furthermore, in the case of A = Ag, it is used as a counter ion that generates an acid that is necessary for an initiation and growth reaction in photo polymerization. Furthermore, in the case of A = $NH_4$, it is useful as a raw material that is used in the manufacture of an intermediate of medicine.

**Claims**

1. A method of manufacturing phosphorous pentafluoride, wherein hydrogen fluoride and a hexafluorophosphate ($MPF_6$) are introduced into a container, and phosphorus pentafluoride is produced according to the reaction of Formula 1:

$$MPF_6 + u\, HF \rightarrow PF_5 + MF \cdot r\, (HF) \qquad (Formula\ 1)$$

wherein M is any one or more of Li, Na, K, Rb, Cs, $NH_4$, and Ag, $0 \leq r \leq u$, and
wherein HF is used in the stoichiometric amount or more.

2. The method of manufacturing phosphorous pentafluoride according to claim 1,
wherein the reaction of Formula 1 is heated to the boiling point of the reaction mixture.

3. The method of manufacturing phosphorous pentafluoride according to claim 1,
wherein a heat medium that is used in heating of the reaction system of Formula 1 is heated to a temperature of 20 °C or more and less than 120 °C.

4. The method of manufacturing phosphorous pentafluoride according to claim 1,
wherein $MPF_6$ is synthesized by the reaction of Formula 2:

$$MF \cdot r\, (HF) + HF + H_xPO_yF_z \rightarrow MPF_6 + yH_2O \qquad (Formula\ 2)$$

wherein $r \geq 0$, $0 \leq x \leq 3$, $1 \leq y \leq 4$, $4 \leq z \leq 6$, and
wherein HF is used in a stoichiometric amount or more.

5. The method of manufacturing phosphorous pentafluoride according to claim 1,
wherein $MPF_6$ is synthesized by the reaction of Formulae 3 and 4:

$$H_xPO_yF_z + pHF \rightarrow HPF_6 \cdot qH_2O \qquad (Formula\ 3)$$

(wherein $q \geq 1$); and

$$HPF_6 \cdot qH_2O + MF \cdot r\, (HF) \rightarrow MPF_6 + (r + 1)\, HF + qH_2O \qquad (Formula\ 4).$$

6. The method of manufacturing phosphorous pentafluoride according to claim 1,
wherein MF·r (HF) that is produced by Formula 1 is reused in Formula 2 or 4.

7. The method of manufacturing phosphorous pentafluoride according to claim 1,
wherein M is any of Na, K, Rb, Cs, and $NH_4$.

8. A method of manufacturing a hexafluorophosphate, wherein a hexafluorophosphate ($APF_6$) having high purity and low moisture concentration is produced according to the reaction of Formula 5 using a fluoride (AF) and phosphorous pentafluoride that is obtained by the method according to any one of claims 1 to 7:

$$PF_5 + AF \rightarrow APF_6 \qquad (Formula\ 5)$$

wherein A is any one or more of Li, Na, K, Rb, Cs, $NH_4$, and Ag.

9. The method of manufacturing the hexafluorophosphate according to claim 8,
wherein A is Li.

10. The method of manufacturing the hexafluorophosphate according to claim 8,
wherein a P-containing gas that flows out when manufacturing $APF_6$ is recovered and reused using an absorption liquid containing at least one of water, hydrofluoric acid, and M (M is any one or more of Li, Na, K, Rb, Cs, NH$_4$, and Ag).

**Amended claims under Art. 19.1 PCT**

**1.** (Amended) A method of manufacturing phosphorous pentafluoride, wherein hydrogen fluoride and a hexafluorophosphate (MPF$_6$) are introduced into a container, and phosphorus pentafluoride is produced according to the reaction of Formula 1:

$$MPF_6 + u \cdot HF \rightarrow PF_5 + MF \cdot r \, (HF) \qquad (Formula\ 1),$$

wherein M is any one or more of Li, Na, K, Rb, Cs, NH$_4$, and Ag, $0 \leq r \leq 6$, $u > 0$, and
wherein HF is used in a stoichiometric amount or more.

**2.** The method of manufacturing phosphorous pentafluoride according to claim 1,
wherein the reaction of Formula 1 is heated to the boiling point of the reaction mixture.

**3.** The method of manufacturing phosphorous pentafluoride according to claim 1,
wherein a heat medium that is used in heating of the reaction system of Formula 1 is heated to a temperature of 20 °C or more and less than 120 °C.

**4.** The method of manufacturing phosphorous pentafluoride according to claim 1,
wherein MPF$_6$ is synthesized by the reaction of Formula 2:

$$MF \cdot r \, (HF) + HF + H_xPO_yF_z \rightarrow MPF_6 + yH_2O \qquad (Formula\ 2),$$

wherein $r \geq 0$; $0 \leq x \leq 3$; $1 \leq y \leq 4$; $0 \leq z \leq 6$, and
wherein HF is used in a stoichiometric amount or more.

**5.** The method of manufacturing phosphorous pentafluoride according to claim 1,
wherein MPF$_6$ is synthesized by the reaction of Formulae 3 and 4:

$$H_xPO_yF_z + pHF \rightarrow HPF_6 \cdot qH_2O \qquad (Formula\ 3)$$

(wherein $q \geq 1$); and

$$HPF_6 \cdot qH_2O + MF \cdot r \, (HF) \rightarrow MPF_6 + (r + 1)\, HF + qH_2O \quad (Formula\ 4).$$

**6.** (Amended) The method of manufacturing phosphorous pentafluoride according to claim 1,
wherein MF$\cdot$r (HF) that is produced by Formula 1 is reused in Formula 2.

**7.** The method of manufacturing phosphorous pentafluoride according to claim 1,
wherein M is any of Na, K, Rb, Cs, and NH$_4$.

**8.** (currently amended) A method of manufacturing a hexafluorophosphate, wherein a hexafluorophosphate (APF$_6$) having high purity and low moisture concentration is produced according to the reaction of Formula 6 using a fluoride (AF) and phosphorous pentafluoride that is obtained according to the reaction of Formula 5 by introducing hydrogen fluoride and a hexafluorophosphate (MPF$_6$) in a container:

$$MPF_6 + u \cdot HF \rightarrow PF_5 + MF \cdot r \, (HF) \qquad (Formula\ 5),$$

wherein M is any one or more of Li, Na, K, Rb, Cs, $NH_4$, and Ag, $0 \leq r \leq 6$; $u > 0$, and wherein HF is used in a stoichiometric amount or more; and

$$PF_5 + AF \rightarrow APF_6 \qquad \text{(Formula 6)},$$

wherein A is any one or more of Li, Na, K, Rb, Cs, $NH_4$, and Ag.

**9.** The method of manufacturing the hexafluorophosphate according to claim 8, wherein A is Li.

**10.** The method of manufacturing the hexafluorophosphate according to claim 8, wherein a P-containing gas that flows out when manufacturing $APF_6$ is recovered and reused using an absorption liquid containing at least one of water, hydrofluoric acid, and M (M is any one or more of Li, Na, K, Rb, Cs, $NH_4$, and Ag).

**11.** (new) The method of manufacturing phosphorous pentafluoride according to claim 5, wherein MF·r (HF) that is produced by Formula 1 is reused in Formula 4.

**Statement under Art. 19.1 PCT**

In the method of manufacturing phosphorus pentafluoride according to claim 1, hydrogen fluoride in the reaction of Formula 1 is to react with a hexafluorophosphate as an indispensable component.

The method of manufacturing phosphorus pentafluoride according to claim 6 is to reuse MF·r (HF) in Formula 2 according to claim 4.

In the method of manufacturing a hexafluorophosphate according to claim 8, phosphorous pentafluoride that is used in the reaction with a fluoride is obtained by the reaction of a hexafluorophosphate and hydrogen fluoride according to Formula 5.

The method of manufacturing phosphorus pentafluoride according to claim 11 is to reuse MF·r (HF) in Formula 4 according to claim 5.

Fig.1

REFLUX TOWER

PF$_6$

COOLING MEDIUM

COOLING MEDIUM

MPF$_6$

HF

HF

HF

REACTION VESSEL

HEAT MEDIUM

HEAT MEDIUM

MF/HF

<div align="center">**INTERNATIONAL SEARCH REPORT**</div>

| | International application No. |
|---|---|
| | PCT/JP2008/051807 |

**A. CLASSIFICATION OF SUBJECT MATTER**
*C01B25/10*(2006.01)i, *B01D53/14*(2006.01)i, *B01D53/68*(2006.01)i, *B01D53/77*
(2006.01)i, *C01B25/455*(2006.01)i

According to International Patent Classification (IPC) or to both national classification and IPC

**B. FIELDS SEARCHED**

Minimum documentation searched (classification system followed by classification symbols)
C01B25/10, B01D53/14, B01D53/68, B01D53/77, C01B25/455

Documentation searched other than minimum documentation to the extent that such documents are included in the fields searched
Jitsuyo Shinan Koho            1922-1996    Jitsuyo Shinan Toroku Koho    1996-2008
Kokai Jitsuyo Shinan Koho      1971-2008    Toroku Jitsuyo Shinan Koho    1994-2008

Electronic data base consulted during the international search (name of data base and, where practicable, search terms used)
JST7580(JDream2), JSTPlus(JDream2), CA(STN)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 04-265213 A  (Central Glass Co., Ltd.),<br>21 September, 1992 (21.09.92),<br>Claim 1; Par. No. [0006]; example 2<br>(Family: none) | 8-9<br>1-7,10 |
| X<br>A | JP 01-072901 A  (Central Glass Co., Ltd.),<br>17 March, 1989 (17.03.89),<br>Example 1<br>(Family: none) | 8-9<br>1-7,10 |
| X<br>A | JP 11-092135 A  (Elf Atochem S.A.),<br>06 April, 1999 (06.04.99),<br>Claim 1<br>& EP 882671 A1        & US 5935541 A | 8-9<br>1-7,10 |

☐ Further documents are listed in the continuation of Box C.   ☐ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered  to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search<br>03 March, 2008 (03.03.08) | Date of mailing of the international search report<br>18 March, 2008 (18.03.08) |
|---|---|
| Name and mailing address of the ISA/<br>Japanese Patent Office | Authorized officer |
| Facsimile No. | Telephone No. |

Form PCT/ISA/210 (second sheet) (April 2007)

**EP 2 123 600 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3607020 A
- JP 6472901 A
- JP 2000154009 A
- JP 2001122605 A
- FR 2086704
- FR 2082502
- US 3634034 A
- JP 2005507849 A
- US 3584999 A

- JP 3494343 B
- DE 290889
- JP 60251109 A
- JP 4175216 A
- JP 6056413 A
- JP 5279003 A
- JP 11092135 A
- JP 5072324 A

**Non-patent literature cited in the description**

- *Fluorine Chemistry,* 1950, vol. 1
- *J. Inorg. Nucl. Chem.,* 1961, vol. 20, 147-154
- **Clifford ; Beachell ; Jack.** Fluorination of Phosphorous Using ClF3 in Liquid HF Medium. *Inorg. Nucl. Chem,* 1957, vol. 5, 76-78

- Fluorination of Phosphorous Pentachloride (PCl5) Using Arsenic Trifluoride. *Ruff Die Chemie des Fluoros,* 1920, 239
- **Gros ; Hayman ; Stuart.** *Trans. Faraday Soc.,* 1966, vol. 62 (10), 2716-18